# EUROPEAN PATENT APPLICATION

(11) **EP 4 310 217 A1**
(43) Date of publication of application: **24.01.2024**
(21) Application number: 22794994.8
(22) Date of filing: 28.04.2022
(51) Int. Cl.: C22C 38/22, C21D 9/08, C22C 38/26, C22C 1/02

(54) **HIGH-STRENGTH AND HEAT-RESISTANT CASING FOR HEAVY OIL EXPLORATION AND MANUFACTURING METHOD THEREFOR**

(30) Priority: 30.04.2021 CN 202110479389
(71) Applicant: BAOSHAN IRON & STEEL CO., LTD., Shanghai 201900 (CN)
(72) Inventor: DONG, Xiaoming, Shanghai 201900 (CN); ZHANG, Zhonghua, Shanghai 201900 (CN); YANG, Weiguo, Shanghai 201900 (CN)
(74) Representative: Maiwald GmbH
(86) International application number: PCT/CN2022/089945
(87) International publication number: WO 2022/228524

(57) **Abstract**

The present disclosure provides a heat-resistant casing for heavy oil exploration, the casing comprising the following in percentage by weight: C: 0.08-0.19%, Si: 0.1-0.4%, Mn: 1.0-1.8%, Cr: 1-2%, Mo: 0.1-0.4%, W: 0.1-0.5%, V: 0.01-0.15%, Al: 0.01-0.05%, N: 0.008% or less, Fe and inevitable impurities, wherein the heat-resistant casing does not contain Ti or Nb. The oil casing of the present disclosure has both good high-temperature strength and creep resistance, and meet the usage requirements for the casing performance under high-temperature environment for heavy oil exploration, especially the requirement for the casing performance in heavy oil exploration using steam flooding. The invention further provides a manufacturing method of the heat-resistant casing for heavy oil exploration.

## Description

### TECHNICAL FIELD

The present disclosure relates to a heat-resistant casing, in particular to a high-strength and heat-resistant casing for heavy oil exploration and a manufacturing method therefor.

### BACKGROUND

As the oil recovery industry continues to develop and the amount of oil consumption continues to increase, heavy oil has become a major source of production for many oil companies in the domestic and overseas. There are usually two types of heavy oil recovery: steam soaking and steam flooding. Steam soaking refers to the heavy oil recovery method that accomplishes the three processes of steam injection, soaking and production. Steam flooding refers to the continuous injection of steam from steam injection wells with a suitable well pattern, forming a steam zone around the injection well, and the underground crude oil is heated and drove by the injected steam to a surrounding production well for yield. Before 1990s, heavy oil exploration in China was mainly based on steam soaking wells. However, heavy oil exploration by steam soaking recovery technology in domestic oil fields has generally entered the stage of high rounds and subsequent recovery. Due to the decrease of the formation pressure, the exploration effect becomes worse and the yield decreases. Using the mode of heavy oil exploration by means of steam flooding can effectively improve the yield rate of the heavy oil fields that has entered the high-round recovery stage and has outstanding effects on the production of heavy oil.

Higher demands have also been placed on heat-resistant casings as the mode of heavy oil recovery has shifted from steam soaking wells to steam flooding wells. Unlike the low-temperature working condition environment of common oil and gas exploration, the heavy oil exploration by means of steam flooding has the characteristics of 350 °C, 17 MPa steam pressure and long-term service. The casing is subjected to cyclic stress changes caused by temperature rise and temperature drop during long-term service and is deformed due to creep in a high-temperature environment, therefore, it is required that the heat-resistant casing has good high-temperature mechanical properties and creep resistance to prevent problems of casing loss due to insufficient mechanical properties of the casing or material creep in a high-temperature environment.

CN200810204727.6 discloses steel for a heat-resistant casing, which has the following compositions by weight percentage: C: 0.2-0.30%, Si: 0.10-0.3%, Mn: 0.4-1.0%, Cr: 0.5-1.5%, W: 0.1-0.5%, and the remainder of Fe and inevitable impurities. The manufacturing method of the steel for a heat-resistant casing comprises the following steps: performing smelting, casting and hot rolling according to the above composition recipe to form a seamless steel pipe; heating the seamless steel pipe in a temperature range of 820 °C to 920 °C and holding for 30-60 minutes for sufficient austenization; quenching, wherein the pipe for quenching is subjected to tempering at a temperature range of 580 °C to 720 °C and holding for 30-90 minutes.

CN201710469926.9 discloses a seamless steel pipe, a manufacturing method thereof and a heavy oil thermal recovery casing. The seamless steel pipe comprises, by weight percentage: C: 0.20-0.30%, Si: 0.20-0.60%, Mn: 0.50-1.20%, P≤0.015%, S≤0.003%, Cr: 0.80-1.30%, Mo: 0.30-0.70%, Ti: 0.005-0.02%, Ni≤0.10%, Al: 0.01-0.05%, and the balance of iron (Fe) and inevitable impurities.

### SUMMARY

An object of the present disclosure is to provide a high-strength and heat-resistant casing for heavy oil exploration and a manufacturing method therefor. The oil casing of the present disclosure has both good high-temperature strength and creep resistance, and meet the usage requirements for the casing performance under high-temperature environment for heavy oil exploration, especially the requirements for the casing performance in heavy oil exploration using steam flooding.

The ambient temperature for heavy oil exploration is relatively high, generally reaching 350 °C, and the casing needs to have good high-temperature mechanical properties and creep resistance to prevent casing loss problems caused by insufficient mechanical properties or material creep in the high-temperature environment. A common design idea is to add alloying elements such as Cr, Mo and W that leads to solid solution strengthening to enhance the bonding force between matrix atoms, so as to increase the strength of the material under high-temperature environment and form a microstructure that is advantageous for creep resistance.

The grain size of the steel also has a significant effect on the creep resistance. As creep continues, grain boundary sliding and grain boundary diffusion are relatively sufficient, which promotes the formation and development of cavities and cracks along grain boundaries and finally leads to material fracture. Compared with fine-grained materials, coarse-grained materials have smaller total grain boundary area, less deformation caused by grain boundary sliding, lower creep speed and higher creep fracture limit, so that increasing grain size can improve the creep resistance of the material. However, in the prior art, the heat treatment of the heat-resistant casing adopts an off-line quenching + tempering heat treatment process, in which the casing is cooled to room temperature after hot rolling, then is re-austenitised in a quenching furnace for quenching and tempering. This heat treatment process significantly refines the grains and reduces creep resistance.

In embodiments provided by the present disclosure, the on-line controlled cooling technology different from the prior art is adopted, so that the casing is directly quenched online after hot rolling, and the off-line quenching process is omitted, meanwhile, the original coarse grains during hot rolling are retained when the casing is quenched online using residual heat after hot rolling, thus solving the problem of grain refinement caused by quenching of the austenitised casing in the traditional off-line heat treatment process, and improving the creep resistance of the material. However, when the casing is directly quenched after hot rolling, since the grain distortion stores high energy, cracks are likely to occur in the quenching process, thus, the embodiments provided by the present disclosure optimise the types and amounts of C, Mn, Cr, Mo, W and other alloying elements of the heat-resistant casing in combination with the characteristics of the on-line controlled cooling process, so as to prevent pipe cracks and stress concentration, ensuring safe production and stable quality. Ti or Nb is not added in this application because precipitates of alloying elements such as Ti and Nb will refine the grains.

A first aspect of the present disclosure provides a heat-resistant casing for heavy oil exploration, comprising the following elements in percentage by weight: C: 0.08-0.19%, Si: 0.1-0.4%, Mn: 1.0-1.8%, Cr: 1-2%, Mo: 0.1-0.4%, W: 0.1-0.5%, V: 0.01-0.15%, Al: 0.01-0.05%, N<0.008%, Fe and inevitable impurities, wherein the heat-resistant casing does not contain Ti or Nb.

Another aspect of the present disclosure provides a heat-resistant casing for heavy oil exploration, comprising the following elements in percentage by weight: C: 0.08-0.19%, Si: 0.1-0.4%, Mn: 1.0-1.8%, Cr: 1-2%, Mo: 0.1-0.4%, W: 0.1-0.5%, V: 0.01-0.15%, Al: 0.01-0.05%, N<0.008%; and the balance of Fe and inevitable impurities.

Preferably, the elements in the heat-resistant casing further satisfy: C: 0.1-0.16%; Si: 0.15-0.35%; Mn: 1-1.6%; Cr: 1-1.5%; Mo: 0.15-0.4%; W: 0.2-0.5%; V: 0.05-0.12%; Al: 0.015-0.035%.

Preferably, the aforementioned inevitable impurities comprise P and S and satisfy, in percentage by weight, P<0.015% and S<0.005%.

Preferably, the inevitable impurities further satisfy: P<0.013%, and S≤0.003%.

The design ideas for each chemical element in the high-strength and heat-resistant casing provided by the present disclosure are as follows:
C: C is a carbide forming element and can increase the strength of the steel. When the amount of C is less than 0.08 wt%, the hardenability of the steel will be reduced, thereby reducing the strength and toughness of the steel. However, when the amount of C is greater than 0.19 wt%, the sensitivity to quenching cracking of the steel will be increased, and quenching cracks are easy to generate at the time of on-line quenching. In order to meet the requirement of high strength of the oil casing, the amount of C needs to be controlled to be 0.08-0.19 wt% in the technical solution of the present disclosure.

Si: Si is in solid solution in ferrite, and can increase the yield strength of the steel, but the amount of Si should not be too high. An Si amount too high will deteriorate the workability and toughness of the steel, and an Si amount below 0.1 wt% will result in easy oxidation of the oil casing, so that the amount of Si should be controlled to be 0.10-0.40 wt%.

Mn: Mn is an austenite forming element and the effect of solid solution strengthening effect in steel will increase the high-temperature mechanical properties of the steel. In the steel grade system of the high-strength and heat-resistant casing according to the present disclosure, when the amount of Mn is less than 1 wt%, the hardenability of the steel will be significantly reduced, the solid solution strengthening effect will be weakened, and the high-temperature strength will be reduced; when the amount of Mn is greater than 1.8 wt%, composition segregation is liable to occur to generate quenching cracks. For this reason, the amount of Mn is controlled to be between 1 wt% and 1.8 wt% in the technical solution of the present disclosure.

V: V is a typical precipitation strengthening element that can compensate for the decrease in strength due to the decrease in carbon, when the amount of V is less than 0.01%, the strengthening effect is not obvious, and when the amount of V is greater than 0.15%, coarse V(CN) is easy to form, thus reducing toughness.

Mo: Mo mainly improves the strength and tempering stability of steel through carbides and solid solution strengthening. In the technical solution of the present disclosure, when the amount of added Mo exceeds 0.4 wt%, quenching cracks are easy to generate. Once the amount of Mo is below 0.1 wt%, the strength of the petroleum casing cannot meet the high strength requirement. Based on this, the present disclosure controls the amount of Mo to be between 0.1 wt% and 0.4 wt%.

Cr: Cr is a strong hardenability enhancing element and a strong carbide forming element, which has strong solid solution strengthening and precipitation strengthening effects in steel and can improve the high-temperature mechanical properties of steel. However, when the amount of Cr is greater than 2%, coarse M₂₃C₆ carbides are liable to precipitate at grain boundaries, thus decreasing toughness, and quenching cracking is liable to occur. When the amount of Cr is less than 1%, high-temperature mechanical properties are insufficient.

W: the solid solution strengthening of W can enhance the bonding force between the matrix atoms and increase the strength of the material in a high-temperature environment, and if the weight percentage of W is greater than 0.5 wt%, the strengthening effect is not obvious, resulting in alloy waste. If the amount of W is less than 0.1 wt%, the high-temperature mechanical properties of the steel cannot be improved. It is desirable in the present disclosure to control the amount of W to be 0.1-0.5 wt%.

Al: Al is a good deoxidising and nitrogen-fixing element, and it is appropriate that the amount of Al is 0.01-0.05%.

N: N is an impurity, the amount of which is reduced as much as possible depending on the process conditions.

A second aspect of the present disclosure provides a manufacturing method for the high-strength and heat-resistant casing for heavy oil exploration, comprising the following steps:
a smelting step: blending chemical compositions of the above-mentioned high-strength and heat-resistant casing for heavy oil exploration to obtain a raw material, and smelting the raw material to obtain a billet;
a continuous casting step: continuously casting the billet to obtain a round billet;
a perforating step: heating and perforating the round billet;
a rolling step: rolling the perforated round billet;
a sizing step: sizing the round billet subjected to final rolling to obtain a casing;
a controlled cooling step: controlling a temperature of a body of the casing before cooling to be 850-900 °C, performing water spray cooling on the outer surface of the casing using an on-line controlled cooling device, and controlling the amount of cooling water such that a cooling rate is 20-40 °C/s when an inner wall temperature of the casing body is 500-900 °C, a cooling rate of 30-50 °C/s when the inner wall temperature of the casing body is below 500 °C, and the final cooling temperature is not higher than 50 °C;
a heat treatment step: performing tempering heat treatment after the casing is cooled to room temperature; and
a straightening step: straightening the casing.

Preferably, in the continuous casting step, the superheat of molten steel is controlled to be lower than 40 °C and the continuous casting speed is 2.0-2.4 m/min.

Preferably, in the perforating step, the round billet is heated and perforated in an annular furnace at 1200-1260 °C, and the perforating temperature is 1120-1200 °C.

Preferably, in the rolling step, the finish rolling temperature is controlled to be 980-1080 °C.

Preferably, in the sizing step, the sizing temperature is 920-960 °C.

Preferably, in the heat treatment step, the tempering temperature is 600-700 °C and a holding time is 50-80 min.

Preferably, in the straightening step, the straightening temperature is 400-500 °C.

The manufacturing method for the high-strength and heat-resistant casing provided by the present disclosure is carried out by adopting on-line quenching + tempering heat treatment, so that the steel obtains higher high-temperature strength and better creep resistance. The process operation is simple and large-scale production and manufacturing are easy to realise, thus having good economic benefits.

The microstructure of the casing provided by the present disclosure is tempered martensite with a grain size rating of less than 6 according to ASTM E112.

The heat-resistant casing in steel grade above 110 ksi made according to the manufacturing method provided by the present disclosure has a yield strength of 758-1069 MPa, a tensile strength of 862 MPa or more, an elongation of 18% or more, a transverse Charpy impact energy at 0 °C of 60 J or more, a high-temperature yield strength at 350 °C of 700 MPa or more, and a creep rate of 1.5×10⁻⁶ %/s or less, and can meet the usage requirements for the casing performance in a high-temperature environment for heavy oil exploration.

### BRIEF DESCRIPTION OF THE DRAWINGS

Fig. 1 shows a metallic structure of Embodiment A3 of the present disclosure; and
Fig. 2 shows a metallic structure of Comparative Example B3 of the present disclosure.

### DETAILED DESCRIPTION

Embodiments of the present disclosure will be described below with reference to the following specific embodiments, and other advantages and effects of the present disclosure will be readily apparent to those skilled in the art from the content disclosed in this description. Although the description of the present disclosure will be described in connection with preferred embodiments, it does not mean that the features of the present invention are only limited to these embodiments. On the contrary, the description of the present invention in connection with the embodiments is intended to cover other alternatives or modifications that are possible based on the claims of the present disclosure. The following description contains numerous specific details in order to provide a thorough understanding of the present disclosure. The present disclosure may also be practiced without these details. In addition, some specific details will be omitted from the description in order to avoid cluttering or obscuring the focus of the present disclosure.

An embodiment of an aspect of the present disclosure provides a high-strength and heat-resistant casing for heavy oil exploration, comprising the following elements in percentage by weight: C: 0.08-0.19%, Si: 0.1-0.4%, Mn: 1.0-1.8%, Cr: 1-2%, Mo: 0.1-0.4%, W: 0.1-0.5%, V: 0.01-0.15%, Al: 0.01-0.05%, N≤0.008%, Fe and inevitable impurities, wherein the heat-resistant casing does not contain Ti or Nb.

Another embodiment of the aspect of the present disclosure provides a high-strength and heat-resistant casing for heavy oil exploration, comprising the following elements in percentage by weight: C: 0.08-0.19%, Si: 0.1-0.4%, Mn: 1.0-1.8%, Cr: 1-2%, Mo: 0.1-0.4%, W: 0.1-0.5%, V: 0.01-0.15%, Al: 0.01-0.05%, N≤0.008%, and the balance of Fe and inevitable impurities.

Correspondingly, the present disclosure further provides a manufacturing method for the above-mentioned high-strength and heat-resistant casing, which comprises the following steps: smelting, continuous casting, perforating, rolling, sizing, controlled cooling, heat treatment and straightening.

Preferably, in the manufacturing method for the high-strength and heat-resistant casing of the present disclosure, in the above continuous casting step, the superheat of molten steel is controlled to be lower than 40 °C, the continuous casting speed is 2.0-2.4 m/min, and a round billet is obtained. The round billet is heated and perforated in an annular furnace at 1200-1260 °C, and the perforating temperature is 1120-1200 °C. The finish rolling temperature is controlled to be 980-1080 °C, and the round billet subjected to finish rolling is sized at a sizing temperature of 920-960 °C to obtain a casing. Controlled cooling is performed on the sized casing by a controlled cooling device, the temperature of the body of the casing before cooling is 850-900 °C, and water spray cooling is performed on the outer surface of the casing using an on-line controlled cooling device, and in order to reduce residual stress on the inner and outer walls, the amount of cooling water is controlled such that a cooling rate is 20-40 °C/s when an inner wall temperature of the casing body is 500-900 °C, a cooling rate of 30-50 °C/s when the inner wall temperature of the casing body is below 500 °C, and the final cooling temperature is not higher than 50 °C.

Preferably, tempering heat treatment is performed after the casing is cooled to room temperature, wherein the tempering temperature is 600-700 °C and a holding time is 50-80 min. Finally, the casing is thermally straightened at 400-500 °C.

The present disclosure can be used to manufacture heat-resistant casings with good high-temperature mechanical properties and in steel grades above 110 ksi.

The high-strength and heat-resistant casing provided by the present disclosure utilises the residual heat of the hot-rolled steel pipe for quenching, and removes the off-line quenching process. Using the process of on-line quenching + tempering heat treatment to produce the heat-resistant casing can improve the high-temperature mechanical properties and creep resistance of the casing, as well as improving the production efficiency, reducing the production cost and energy consumption to realise green manufacturing.

Hereinafter, the present disclosure will be explained in more detail according to embodiments.

Embodiments A1-A7 are embodiments of high-strength and heat-resistant casings for heavy oil exploration provided by the present disclosure, and B1-B4 are comparative examples.

The casings in Embodiments A1-A7 and Comparative Examples B1-B4 are manufactured according to the following steps:
1) smelting: controlling the weight percentage of each chemical element in Embodiments A1-A7 and Comparative Examples B1-B4 according to Table 1;
2) continuous casting: performing continuous casting to obtain a round billet, wherein the superheat of molten steel is controlled to be lower than 40 °C, and the continuous casting speed is 2.0-2.4 m/min;
3) perforating: heating and perforating the round billet subjected to the continuous casting step in an annular furnace at 1200-1260 °C, wherein the perforating temperature is 1120-1200 °C;
4) rolling: rolling the perforated round billet, wherein the finish rolling temperature is controlled to be 980-1080 °C;
5) sizing: sizing the round billet subjected to final rolling to obtain a casing, wherein the sizing temperature is controlled to be 920-960 °C;
6) controlled cooling: except for Comparative Example B3, controlling the temperature of the body of the casing before cooling to be 850-900 °C, and controlling the amount of cooling water such that a cooling rate is 20-40 °C/s when an inner wall temperature of the casing body is 500-900 °C, a cooling rate of 30-50 °C/s when the inner wall temperature of the casing body is below 500 °C, and cooling to a temperature not higher than 50 °C; Comparative Example B3 adopts an off-line quenching process of the prior art, specifically comprising: heating at 900 °C and holding for 40 min, then water quenching, and tempering at 650 °C and holding for 60 min.
7) heat treatment: tempering the casing at 600-700 °C and holding for 50-80 min; and
8) straightening: thermally straightening the casing at 400-500 °C.

**Table 1 Weight percentages of the chemical elements for Embodiments A1-A7 and Comparative Examples B 1-B4 (wt%, the balance being Fe and inevitable impurities)**

| Serial Number | C | Si | Mn | Cr | Mo | W | Al | N | V |
|---|---|---|---|---|---|---|---|---|---|
| A1 | 0.08 | 0.2 | 1.0 | 1.0 | 0.1 | 0.1 | 0.01 | 0.004 | 0.07 |
| A2 | 0.10 | 0.1 | 1.2 | 1.6 | 0.3 | 0.2 | 0.04 | 0.005 | 0.01 |
| A3 | 0.12 | 0.3 | 1.4 | 1.4 | 0.2 | 0.5 | 0.05 | 0.006 | 0.05 |
| A4 | 0.16 | 0.4 | 1.6 | 1.2 | 0.4 | 0.4 | 0.03 | 0.007 | 0.12 |
| A5 | 0.18 | 0.25 | 1.8 | 2 | 0.35 | 0.3 | 0.02 | 0.008 | 0.15 |
| A6 | 0.16 | 0.15 | 1.6 | 1.2 | 0.4 | 0.4 | 0.015 | 0.007 | 0.12 |
| A7 | 0.19 | 0.35 | 1.8 | 1.5 | 0.15 | 0.3 | 0.035 | 0.008 | 0.15 |
| B1 | 0.26 | 0.1 | 1.2 | 1.6 | 0.3 | 0.2 | 0.04 | 0.005 | 0.01 |
| B2 | 0.12 | 0.3 | 1.4 | 1.4 | 0.2 | - | 0.05 | 0.006 | 0.05 |
| B3 | 0.16 | 0.4 | 1.6 | 1.2 | 0.4 | 0.4 | 0.03 | 0.007 | 0.12 |
| B4 | 0.18 | 0.25 | 1.8 | 0.5 | - | 0.3 | 0.02 | 0.008 | 0.15 |

**Table 2 Process parameters of Embodiments A1-A7 and Comparative Examples B 1-B4 of the present disclosure**

| Serial Number | Continuous casting step | | Perforating step | | Rolling step | Sizing step | Water cooling after rolling | | | Heat treatment step | | Straightening |
|---|---|---|---|---|---|---|---|---|---|---|---|---|
| | Superheat (°C) | Continuous casting speed (m/min) | Furnace temperature (°C) | Perforating temperature (°C) | Finish rolling temperature (°C) | Sizing temperature (°C) | Temperature before cooling (°C) | Cooling rate when inner wall temperature is 500-900 °C (°C/S) | Cooling rate when inner wall temperature is 500 °C or less (°C/S) | Tempering temperature (°C) | Holding time (min) | Straightening temperature (°C) |
| A1 | 15 | 2 | 1260 | 1180 | 980 | 920 | 900 | 20 | 30 | 640 | 50 | 400 |
| A2 | 20 | 2.1 | 1210 | 1200 | 1000 | 930 | 890 | 25 | 35 | 600 | 60 | 420 |
| A3 | 40 | 2.2 | 1220 | 1170 | 1010 | 940 | 870 | 30 | 40 | 690 | 60 | 450 |
| A4 | 25 | 2.3 | 1230 | 1190 | 1040 | 960 | 850 | 35 | 45 | 680 | 80 | 470 |
| A5 | 20 | 2.4 | 1240 | 1150 | 1080 | 950 | 880 | 40 | 50 | 650 | 70 | 500 |
| A6 | 25 | 2.3 | 1220 | 1180 | 1040 | 960 | 850 | 35 | 45 | 680 | 80 | 450 |
| A7 | 20 | 2.4 | 1240 | 1150 | 1080 | 950 | 880 | 40 | 40 | 660 | 70 | 470 |
| B1 | 15 | 2 | 1260 | 1180 | 980 | 920 | 900 | 20 | 30 | 640 | 50 | 400 |
| B2 | 20 | 2.1 | 1210 | 1200 | 1000 | 930 | 890 | 25 | 35 | 600 | 60 | 420 |
| B3 | 40 | 2.2 | 1220 | 1170 | 1010 | 940 | 870 | - | - | - | * | * |
| B4 | 25 | 2.3 | 1230 | 1190 | 1040 | 960 | 850 | 35 | 45 | 680 | 80 | 500 |

| | | | | | | | | | | | | |
|---|---|---|---|---|---|---|---|---|---|---|---|---|
| *Instead of the on-line controlled cooling process, B3 adopts off-line quenching + tempering process for heat treatment, of which the specific parameters are: quenching at 900 °C and holding for 40 min, and tempering at 690 °C and holding for 60 min. | | | | | | | | | | | | |

**Table 3 Mechanical properties of casings in Embodiments A1-A7 and Comparative Examples B 1-B4 of the present disclosure**

| Serial Number | Yield strength (MPa) | Tensile strength (MPa) | Elongation (%) | Transverse Charpy impact energy at 0 °C (J) | High-temperature yield strength at 350 °C (MPa) | Creep rate (%/s) | Grain size rating |
|---|---|---|---|---|---|---|---|
| A1 | 810 | 870 | 25 | 105 | 710 | 1.1×10⁻⁶ | 5.5 |
| A2 | 830 | 910 | 24 | 98 | 730 | 0.9×10⁻⁶ | 5 |
| A3 | 900 | 970 | 23 | 92 | 750 | 0.6×10⁻⁶ | 4.5 |
| A4 | 980 | 1050 | 21 | 89 | 805 | 0.4×10⁻⁶ | 5 |
| A5 | 1050 | 1100 | 20 | 91 | 850 | 0.2×10⁻⁶ | 4 |
| A6 | 970 | 1020 | 20 | 92 | 790 | 0.4×10⁻⁶ | 5 |
| A7 | 1040 | 1080 | 19 | 90 | 830 | 0.3×10⁻⁶ | 5 |
| B1 | 980 | 1040 | 18 | 80 | 780 | 0.8×10⁻⁶ | 5 |
| B2 | 850 | 910 | 21 | 88 | 690 | 2.5×10⁻⁶ | 4.5 |
| B3 | 920 | 980 | 19 | 95 | 720 | 4.2×10⁻⁶ | 8 |
| B4 | 840 | 910 | 23 | 90 | 670 | 3.4×10⁻⁶ | 5 |

As can be seen from Table 3, the casings in the above Embodiments A1-A7 have a yield strength of 810-1050 MPa, a tensile strength of 862 MPa or more, an elongation of 18% or more, a transverse Charpy impact energy at 0 °C of 60 J or more, a high-temperature yield strength at 350 °C of 700 MPa or more, and a creep rate of 1.5×10⁻⁶ %/s or less, and can meet the usage requirements for the casing performance in a high-temperature environment for heavy oil exploration.

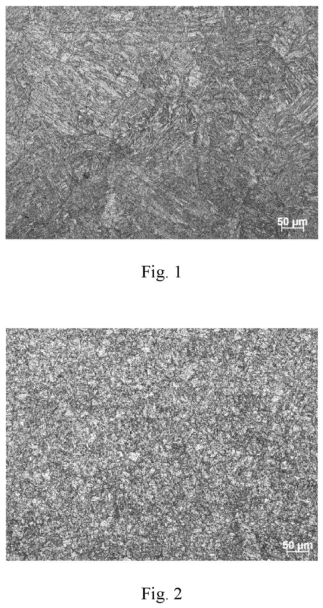

The amount of C in Comparative Example B1 exceeds the range defined by the technical solution of the present disclosure, and although the strength meets the requirements, quenching cracking occurs in the production process, thus causing production failure. W is not added in Comparative Example B2. The components in Comparative Example B3 do not exceed the scope defined by the technical solution of the present disclosure, but the controlled cooling process after rolling is not adopted (that is, the second aspect of the present disclosure that provides a controlled cooling step in the manufacturing method for a high-strength and heat-resistant casing for heavy oil exploration, specifically comprising: controlling the temperature of the casing body before cooling to 850-900 °C, performing water spray cooling on an outer surface of the casing using a controlled cooling device and controlling the amount of cooling water the amount of cooling water such that a cooling rate is 20-40 °C/s when an inner wall temperature of the casing body is 500-900 °C, a cooling rate of 30-50 °C/s when the inner wall temperature of the casing body is below 500 °C, and the final cooling temperature is not higher than 50 °C). The metallic structures of A3 and B3 are shown in Figs. 1 and 2, respectively, wherein the grain structure in Fig. 1 is coarse, which is advantageous for improving creep resistance, while the grains in Fig. 2 are fine with the grain size rating of 8, which means the creep resistance is poor. Cr in Comparative Example B4 exceeds the range defined by the technical solution of the present disclosure, and Comparative Example B4 does not contain Mo. Above all, at least one mechanical property of the casings in Comparative Examples B2-B4 fail to meet the requirements of good high-temperature strength and creep resistance.

## Claims

1. A heat-resistant casing for heavy oil exploration, comprising the following elements in percentage by weight:
C: 0.08-0.19%;
Si: 0.1-0.4%;
Mn: 1.0-1.8%;
Cr: 1-2%;
Mo: 0.1-0.4%;
W: 0.1-0.5%;
V: 0.01-0.15%;
Al: 0.01-0.05%;
N<_0.008%;
Fe and inevitable impurities, wherein the heat-resistant casing does not contain Ti or Nb.

2. A heat-resistant casing for heavy oil exploration, comprising the following elements in percentage by weight:
C: 0.08-0.19%;
Si: 0.1-0.4%;
Mn: 1.0-1.8%;
Cr: 1-2%;
Mo: 0.1-0.4%;
W: 0.1-0.5%;
V: 0.01-0.15%;
Al: 0.01-0.05%;
N<_0.008%; and
the balance being Fe and inevitable impurities.

3. The heat-resistant casing for heavy oil exploration according to claim 1 or 2, wherein the elements further satisfy:
C: 0.1-0.16%;
Si: 0.15-0.35%;
Mn: 1-1.6%;
Cr: 1-1.5%;
Mo: 0.15-0.4%;
W: 0.2-0.5%;
V: 0.05-0.12%;
Al: 0.015-0.035%.

4. The heat-resistant casing for heavy oil exploration according to claim 1 or 2, wherein the inevitable impurities comprise P and S and satisfy, in percentage by weight, P≤0.015%, and S≤0.005%.

5. The heat-resistant casing for heavy oil exploration according to claim 4, wherein the inevitable impurities further satisfy P<0.013%, and S≤0.003%.

6. The heat-resistant casing for heavy oil exploration according to claim 1 or 2, wherein the heat-resistant casing has a microstructure of tempered martensite with a grain size rating of less than 6 according to ASTM E112.

7. The heat-resistant casing for heavy oil exploration according to claim 1 or 2, wherein the heat-resistant casing has a yield strength of 758-1069 MPa, a tensile strength of 862 MPa or more, an elongation of 18% or more, a transverse Charpy impact energy at 0 °C of 60 J or more, a high-temperature yield strength at 350 °C of 700 MPa or more, and a creep rate of 1.5×10⁻⁶%/s or less.

8. A manufacturing method for a heat-resistant casing for heavy oil exploration, comprising the following steps:
a smelting step: blending chemical compositions of the heat-resistant casing for heavy oil exploration according to any one of claims 1 to 5 to obtain a raw material, and smelting the raw material to obtain a billet;
a continuous casting step: continuously casting the billet to obtain a round billet;
a perforating step: heating and perforating the round billet;
a rolling step: rolling the perforated round billet;
a sizing step: sizing the round billet subjected to final rolling to obtain a casing;
a controlled cooling step: controlling a temperature of a body of the casing before cooling to 850-900 °C, performing water spray cooling on an outer surface of the casing using a controlled cooling device, and controlling the amount of cooling water such that a cooling rate is 20-40 °C/s when an inner wall temperature of the casing body is 500-900 °C, a cooling rate of 30-50 °C/s when the inner wall temperature of the casing body is below 500 °C, and a final cooling temperature is not higher than 50 °C;
a heat treatment step: performing tempering heat treatment after the casing is cooled to room temperature; and
a straightening step: straightening the casing.

9. The manufacturing method according to claim 8, wherein in the continuous casting step, a superheat of molten steel is controlled to be lower than 40 °C, and a continuous casting speed is 2.0-2.4 m/min.

10. The manufacturing method according to claim 8, wherein in the perforating step, the round billet is heated and perforated in an annular furnace at 1200-1260 °C, wherein a perforating temperature is 1120-1200 °C.

11. The manufacturing method according to claim 8, wherein in the rolling step, a finish rolling temperature is controlled to be 980-1080 °C.

12. The manufacturing method according to claim 8, wherein in the sizing step, a sizing temperature is 920-960 °C.

13. The manufacturing method according to claim 8, wherein in the heat treatment step, a tempering temperature is 600-700 °C and a holding time is 50-80 min.

14. The manufacturing method according to claim 8, wherein in the straightening step, a straightening temperature is 400-500 °C.
